# FASCICULE DE BREVET EUROPEEN

(11) **EP 0 937 936 B1**
(45) Date de publication et mention de la délivrance du brevet: **22.01.2003**
(21) Numéro de dépôt: 99400392.9
(22) Date de dépôt: 18.02.1999
(51) Int. Cl.: F16L 25/02

(54) **Raccord diélectrique serti**
Verpresste, dielektrische Kupplung
Crimped dielectric fitting

(30) Priorité: 20.02.1998 FR 9802062
(43) Date de publication de la demande: 25.08.1999
(73) Titulaire: Atlantic Industrie, 85000 La Roche sur Yon (FR)
(72) Inventeur: Renon, Olivier, 85150 Landeronde (FR)
(74) Mandataire: Kaspar, Jean-Georges

(56) Documents cités:
- CH-A- 500 418
- PATENT ABSTRACTS OF JAPAN vol. 097, no. 009, 30 septembre 1997 & JP 09 112770 A (SEKISUI CHEM CO LTD), 2 mai 1997

## Description

L'invention concerne les raccords isolants diélectriques, en particulier pour le raccordement d'un chauffe eau, d'un ballon ou d'un équipement de plomberie à des canalisations.

Des raccords de ce type sont disposés en extrémité des tubes de piquage en acier, par exemple un chauffe eau, pour relier celui-ci à des canalisations en cuivre.

Chaque raccord isolant assure la liaison mécanique et l'étanchéité tout en créant une barrière galvanique entre les matériaux métalliques qui par leur nature différente présentent des potentiels électrochimiques différents.

En l'absence d'une telle barrière galvanique, il se produirait des courants vagabonds entraînant une galvanisation et, en fin de compte, une corrosion entre deux surfaces de nature différente en contact l'une avec l'autre.

Un raccord de ce genre est décrit dans le FR 1 528 306. Le raccord est composé d'une première pièce métallique qui à l'une de ses extrémités est pourvue d'un manchon cylindrique qui reçoit une garniture d'étanchéité sous forme d'une rondelle diélectrique contre laquelle repose une bride disposée à l'une des extrémités d'une deuxième pièce métallique. Les moyens diélectriques comportent par ailleurs un manchon en Bakélite dont la face extérieure est légèrement conique et qui est entaillée une ou plusieurs fois de manière que les bords de ces entailles restent écartés les uns des autres. Ce manchon est placé derrière la bride de la deuxième pièce. Pour améliorer l'étanchéité, l'espace annulaire entre la face latérale de la bride et la face interne du manchon est rempli d'une résine, ainsi que l'espace annulaire entre la zone d'extrémité du manchon et la surface externe de la deuxième pièce. L'ensemble de ces éléments est serti par déformation de la paroi du manchon vers l'intérieur. L'extrémité du manchon est par ailleurs repliée vers l'intérieur afin que la résine puisse à cet endroit former un collet de protection. Selon ce document, on revêt de résine une partie de la surface intérieure du joint pour éviter que s'amorcent des arcs électriques entre les surfaces métalliques des première et deuxième pièces.

A partir de cet état de la technique, l'invention a pour but de proposer un raccord isolant diélectrique composé d'un nombre réduit de pièces usinées et qui par conséquent peut être fabriqué à un prix de revient nettement inférieur à celui de ce raccord, tout en assurant une barrière galvanique excellente entre les première et deuxième pièces en métaux différents.

Un autre avantage de l'invention réside dans le fait qu'elle propose un raccord à hauteur réduite, donc plus compact, et qui peut être utilisé pour toutes les dimensions usuelles de plomberie, y compris avec des diamètres d'entrée/sortie différents pour des usages de réduction ou d'augmentation.

Les éléments utilisés dans le raccord suivant l'invention permet par ailleurs la mise en oeuvre dit sertissage sans que la partie des moyens diélectriques se trouvant entre les première et deuxième pièces soit exposés à un risque d'extrusion qui autrement allait affaiblir l'épaisseur de la paroi des moyens diélectriques à cet endroit. L'invention permet ainsi l'utilisation de moyens diélectriques à faible épaisseur, sans risque de les détériorer lors de l'assemblage de.-, pièces par sertissage.

L'invention propose également des moyens diélectriques conçus de manière à protéger une grande, partie de la surface interne du raccord.

L'invention a pour objet un raccord diélectrique selon la revendication 1.

Selon d'autres caractéristiques de l'invention :
- la face latérale de la bride de la deuxième pièce présente une forme arrondie vers l'intérieur ;
- la bride de la deuxième pièce est directement rattachée à la forme arrondie de la face latérale de la bride ;
- la partie de la jupe serrée entre la face interne du manchon de la première pièce et la face latérale de la bride de la deuxième pièce se trouve collée contre au moins la forme arrondie de la face latérale de la bride
- la forme arrondie correspond à un rayon de courbure de l'ordre de 1 à 3 mm.
- la forme arrondie correspond à un rayon de courbure de l'ordre de 2 mm ;
- la rondelle à jupe est rattachée d'un seul tenant à un fût central traversant un trou central de la deuxième pièce ;
- un embout du fût centrai faisant saillie hors du trou central de la deuxième pièce est plié vers l'extérieur de manière à coller contre la f ace d'extrémité de la deuxième pièce, opposée à la bride ;
- la rondelle est emmanchée sur un embout du fût qui fait saillie hors du trou central de la deuxième pièce ;
- les éléments diélectriques sont fabriqués en un matériau à base de polyamide.

L'invention sera maintenant décrite plus en détail à l'aide d'un exemple non limitatif d'un mode de réalisation, en référence aux dessins annexés sur lesquels :
- la figure 1 montre une vue schématique éclatée en coupe des éléments d'un raccord suivant l'invention, avant assemblage ;
- la figure 2 montre une vue schématique en coupe des éléments d'un raccord suivant l'invention, en place avant sertissage
- la figure 3 montre une vue schématique en coupe des éléments d'un raccord suivant l'invention, après sertissage ;
- les figures 4 et 5 montrent des vues schématiques en coupe d'un accord comportant une variante des moyens diélectriques suivant l'invention.
- la figure 6 montre une vue schématique en coupe d'un accord comportant une autre variante des moyens diélectriques suivant l'invention.

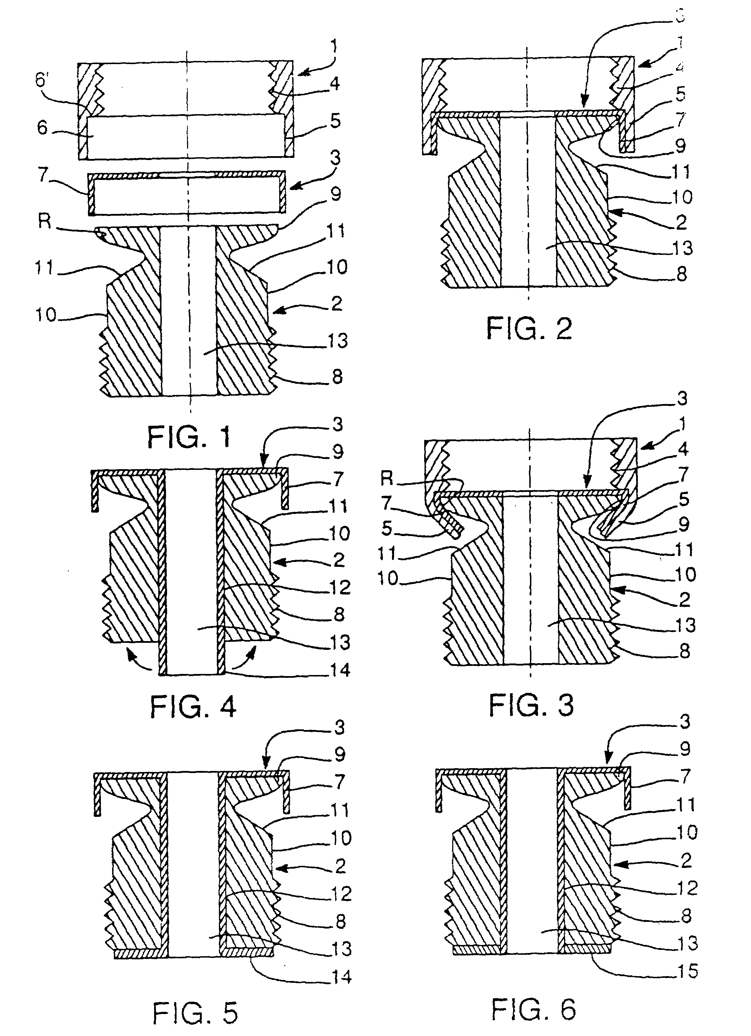

La figure 1 montre ainsi les composants d'un raccord diélectrique suivant l'invention, à savoir : une première pièce 1, par exemple en acier zingué, devant être reliée par sertissage à une deuxième pièce 2, par exemple en laiton, avec interposition de moyens diélectriques 3.

La première pièce est globalement cylindrique et elle est composée d'une partie taraudée 4 et d'une partie en forme de manchon 5 à plus faible paroi. Ce manchon délimite par sa paroi interne et par un épaulement un logement 6 adapté pour recevoir les moyens diélectriques 3.

Les moyens diélectriques 3 sont selon le mode de réalisation illustré sur les figues 1 à 3 constitués par une rondelle à jupe dans laquelle la jupe 7 est d'un seul tenant avec la rondelle. La rondelle à jupe 3 est en un matériau élastiquement déformable tel qu'un matériau à base de polyamide ou de polyacétale.

La deuxième pièce 2 est un corps tubulaire pourvu à l'une de son extrémité d'un filetage 8 et à l'autre extrémité d'une bride 9. Cette deuxième pièce est de préférence en outre pourvu de méplats 10 permettant de bloquer cette pièce en rotation à l'aide d'un outil lors de la mise en place du raccord pour relier l'un à l'autre deux tuyaux métalliques.

Selon ce mode de réalisation, la bride est délimitée par une gorge présentant en coupe une forme globalement en V. La face latérale de la bride présente une forme arrondie rattachée à cette forme en V de la gorge. Le rayon de courbure est de l'ordre de 1 à 3 mm et correspond de préférence à environ 2 mm.

Bien entendu, la bride peut être formée sans gorge directement à l'extrémité de la deuxième pièce, mais également dans ce cas, sa face latérale doit, selon une caractéristique essentielle de l'invention, présenter une forme arrondie rattachée à une partie de forme générale cylindrique du corps de la deuxième pièce.

La figure 2 montre les éléments du raccord en place avant sertissage et la figure 3 montre le raccord assemblé après sertissage. Les moyens d'assemblage sont constitués par le manchon 5 de la première pièce 1 qui est déformé vers l'intérieur et par la bride 9 de la deuxième pièce 3 sur laquelle le manchon est serti, avec interposition d'une partie de la rondelle proprement dite de la rondelle à jupe 3 et d'une partie de la jupe 7 de celle-ci. De préférence, la partie de la jupe 7 se trouvant serrée entre la face interne du manchon 5 et la face latérale de la bride 9 se trouve collée contre au moins la forme arrondie de cette face latérale.

Grâce à la forme arrondie de la face latérale de la bride 9, qui s'étend pratiquement parallèlement à la face interne de la base du manchon 5, la jupe 7 est seulement très légèrement extrudée dans la zone de serrage entre la face interne du manchon de la première pièce 1 et la face latérale de la bride 9 de la deuxième pièce 3.

Le sertissage est effectué d'une manière connue en soi, par exemple par sertissage rotatif et contrepression ou par pressage axial d'un ensemble poinçon-matrice.

Les figures 4 et 5 montrent une variante des moyens diélectriques constitués par une rondelle à jupe reliée d'un seul tenant à un fût central 12 s'étendant à travers le trou central 13 de la deuxième pièce. Ce fût présente un embout 14 qui fait saillie hors du trou central 13 et qui lors d'un assemblage partiel des moyens diélectriques sur la deuxième pièce est déformé par chauffe centrale de manière à coller contre la face d'extrémité de la deuxième pièce, opposée à la bride.

La figure 6 montre une variante des moyens diélectriques correspondant globalement à la variante décrite en référence aux figures 4 et 5, mais ici l'embout 14 faisant saillie hors du trou central 13 est plus court et présente une longueur correspondant à l'épaisseur d'une rondelle 15 en un matériau diélectrique qui est emmanchée sur l'embout 14.

On obtient ainsi, grâce à l'invention, un raccord diélectrique serti comportant très peu de pièces, qui est très compact et qui assure une barrière galvanique excellente entre les première et deuxième pièces en métaux différents. L'invention permet aussi l'utilisation de moyens diélectriques à faible épaisseur, sans risque de les détériorer lors du sertissage.

Il est évident que l'invention n'est pas limitée aux modes de réalisation décrits ci-dessus en détail et que les pièces de raccord peuvent être fabriquées en des métaux différents quelconques. Le raccord suivant l'invention peut en effet être utilisé à chaque fois que l'on souhaite relier l'un à l'autre deux conduits de nature métallique différente pouvant engendrer des courants galvaniques.

## Revendications

1. Raccord diélectrique serti comportant une première pièce de raccord (1) en un seul bloc, en un matériau métallique, relié par des moyens d'assemblage (5, 9) à une deuxième pièce de raccord (2) en un deuxième matériau métallique différent du premier, la première pièce (1) comprenant à l'une de ses extrémités un manchon (5) à épaisseur de paroi réduite dans lequel est logée une bride (9) disposée à l'une des extrémités de la deuxième pièce (2), avec interposition de moyens diélectriques annulaires (3) disposés à l'intérieur du manchon cylindrique (5) et interdisant tout contact direct entre les première et deuxième pièces de raccord (1, 2), les moyens d'assemblage étant constitués par la bride (9) de la deuxième pièce (2) et par la paroi du manchon (5) de la première pièce (1) qui est rabattue par sertissage sur lesdits moyens diélectriques (3) pour ainsi ancrer la bride (9) à l'intérieur du manchon (5), lesdits moyens diélectriques entre les première et deuxième pièces étant constitués par une rondelle à jupe (3) d'un seul tenant en un matériau élastiquement déformable, la jupe (7) se trouvant serrée entre la face interne du manchon (5) et la face latérale de la bride (9), **caractérisé en ce que** la bride (9) de la deuxième pièce (2) est définie par une gorge (11) globalement en V effectuée dans ladite deuxième pièce (2).

2. Raccord diélectrique selon la revendication 1, **caractérisé en ce que** la face latérale de la bride (9) de la deuxième pièce (2) présente une forme arrondie vers l'intérieur.

3. Raccord diélectrique selon la revendication (2), **caractérisé en ce que** la bride (9) de la deuxième pièce est directement rattachée a la forme arrondie de la face latérale de la bride (9).

4. Raccord diélectrique selon la revendication 2 ou 3, **caractérisé en ce que** la partie de la jupe (7) serrée entre la face interne du manchon (5) de la première pièce (1) et la face latérale de la bride (9) de la deuxième pièce (2) se trouve collée contre au moins la forme arrondie de la face latéral de la bride.

5. Raccord diélectrique selon l'une quelconque des revendications 2 à 4, **caractérisé en ce que** la forme arrondie de la face latérale de la bride (9) correspond à un rayon de courbure (R) de l'ordre de 1 à 3 mm.

6. Raccord diélectrique selon la revendication 5, **caractérisé en ce que** la forme arrondie de la face latérale de la bride (9) correspond à un rayon de courbure (R) de l'ordre de 2 mm.

7. Raccord diélectrique selon l'une quelconque des revendications précédentes, **caractérisé en ce que** la rondelle à jupe (3) est rattachée d'un seul tenant à un fût central (12) traversant un trou central (13) de la deuxième pièce (2).

8. Raccord diélectrique selon la revendication 7, **caractérisé en ce qu'**un embout (14) du fût central (12) faisant saillie hors du trou central (13) de la deuxième pièce (2) est plié vers l'extérieur de manière à coller contre la face d'extrémité de la deuxième pièce, opposée à la bride (9).

9. Raccord diélectrique selon la revendication 7, **caractérisé en ce qu'**une rondelle (15) est emmanchée sur un embout (14) du fût (12) qui fait saillie hors du trou central (13) de la deuxième pièce (2).

10. Raccord diélectrique selon l'une quelconque des revendications précédentes, **caractérisé en ce que** les éléments diélectriques (3, 12, 15) sont fabriqués en un matériau à base de polyamide.

## Patentansprüche

1. Verpreßte dielektrische Kupplung, mit einem ersten, aus einem einzigen Block bestehenden Verbindungsteil (1) aus einem metallischen Material, das über Montagemittel (5, 9) mit einem zweiten Verbindungsteil (2) aus einem zweiten metallischen, vom ersten verschiedenen Material besteht, wobei das erste Teil (1) an einem seiner Enden eine Hülse (5) mit verringerter Wanddicke umfaßt, in der ein Bund (9) aufgenommen ist, der an einem der Enden des zweiten Teils (2) angeordnet ist, unter Zwischenschaltung von ringförmigen, dielektrischen Mitteln (3), die im Inneren der zylindrischen Hülse (5) angeordnet sind und jeden direkten Kontakt zwischen dem ersten und dem zweiten Verbindungsteil (1, 2) verhindern, wobei die Montagemittel durch den Bund (9) des zweiten Teils (2) und durch die Wand der Hülse (5) des ersten Teils (1) gebildet sind, welches durch Bördeln auf den dielektrischen Mitteln (3) umgeschlagen ist, um so den Bund (9) im Inneren der Hülse (5) zu verankern, wobei die dielektrischen Mittel zwischen dem ersten und dem zweiten Teil aus einer einstückig aus einem elastisch verformbaren Material gebildeten Scheibe (3) mit einem Mantel bestehen und der Mantel (7) zwischen der Innenfläche der Hülse (5) und der Seitenfläche des Bundes (9) festgeklemmt ist, **dadurch gekennzeichnet, daß** der Bund (9) des zweiten Teiles (2) durch eine im wesentlichen V-förmige Nut (11) festgelegt ist, die in dem zweiten Teil (2) ausgebildet ist.

2. Dielektrische Kupplung nach Anspruch 1, **dadurch gekennzeichnet, daß** die Seitenfläche des Bundes (9) des zweiten Teils (2) eine nach innen hin abgerundete Form aufweist.

3. Dielektrische Kupplung nach Anspruch 2, **dadurch gekennzeichnet, daß** der Bund (9) des zweiten Teils direkt an der abgerundeten Form der Seitenfläche des Bundes (9) angebracht ist.

4. Dielektrische Kupplung nach Anspruch 2 oder 3, **dadurch gekennzeichnet, daß** der zwischen der Innenfläche der Hülse (5) des ersten Teils (1) und der Seitenfläche des Bundes (9) des zweiten Teils (2) festgeklemmte Teil des Mantels (7) zumindest gegen die abgerundete Form der Seitenfläche des Bundes dicht anliegt.

5. Dielektrische Kupplung nach einem der Ansprüche 2 bis 4, **dadurch gekennzeichnet, daß** die abgerundete Form der Seitenfläche des Bundes (9) einem Krümmungsradius (R) von etwa 1 bis 3 mm entspricht.

6. Dielektrische Kupplung nach Anspruch 5, **dadurch gekennzeichnet, daß** die abgerundete Form der Seitenfläche des Bundes (9) einem Krümmungsradius (R) von etwa 2 mm entspricht.

7. Dielektrische Kupplung nach einem der vorhergehenden Ansprüche, **dadurch gekennzeichnet, daß** die Scheibe (3) mit Mantel einstückig mit einem Mittelschaft (12) verbunden ist, der durch eine Mittelöffnung (13) im zweiten Teil (2) hindurch verläuft.

8. Dielektrische Kupplung nach Anspruch 7, **dadurch gekennzeichnet, daß** ein aus der Mittelöffnung (13) des zweiten Teils (2) vorstehendes Ansatzstück (14) des Mittelschaftes (12) so nach außen umgeschlagen wird, daß es an der dem Bund (9) gegenüberliegenden Endfläche des zweiten Teils dicht anliegt.

9. Dielektrische Kupplung nach Anspruch 7, **dadurch gekennzeichnet, daß** eine Scheibe (15) auf einem aus der Mittelöffnung (13) des zweiten Teils (2) vorstehenden Ansatzstück (14) des Schaftes (12) sitzt.

10. Dielektrische Kupplung nach einem der vorhergehenden Ansprüche, **dadurch gekennzeichnet, daß** die dielektrischen Elemente (3, 12, 15) aus einem Material auf Polyamidbasis gefertigt sind.

## Claims

1. A crimped dielectric fitting comprising a first connecting piece (1) formed in one piece from a metal material, connected by assembly means (5, 9) to a second connecting piece (2) made of a second metal material different from the first, the first piece (1) comprising, at one of its ends, a sleeve (5) with reduced wall thickness, in which is housed a flange (9) provided at one of the ends of the second piece (2), with the interposition of annular dielectric means (3) arranged inside the cylindrical sleeve (5) and preventing all direct contact between the first and second connecting pieces (1, 2), the assembly means being formed by the flange (9) of the second piece (2) and by the wall of the sleeve (5) of the first piece (1) which is crimped onto the said dielectric means (3) in order to anchor the flange (9) inside the sleeve (5), the said dielectric means between the first and second pieces being formed by a skirted washer (3) formed in one piece from an elastically deformable material, the skirt (7) being clamped between the inner surface of the sleeve (5) and the lateral surface of the flange (9), **characterised in that** the flange (9) of the second piece (2) is defined by a groove (11) in the overall shape of a V formed in the said second piece (2).

2. A dielectric fitting according to claim 1, **characterised in that** the lateral surface of the flange (9) of the second piece (2) has a shape which is rounded towards the interior.

3. A dielectric fitting according to claim 2, **characterised in that** the flange (9) of the second piece (2) is directly connected to the rounded shape of the lateral surface of the flange (9).

4. A dielectric fitting according to claim 2 or 3, **characterised in that** the part of the skirt (7) clamped between the inner surface of the sleeve (5) of the first piece (1) and the lateral surface of the flange (9) of the second piece (2) fits tightly against at least the rounded shape of the lateral surface of the flange.

5. A dielectric fitting according to any one of claims 2 to 4, **characterised in that** the rounded shape of the lateral surface of the flange (9) corresponds to a radius of curvature (R) of approximately 1 to 3 mm.

6. A dielectric fitting according to claim 5, **characterised in that** the rounded shape of the lateral surface of the flange (9) corresponds to a radius of curvature (R) of approximately 2 mm.

7. A dielectric fitting according to any one of the preceding claims, **characterised in that** the skirted washer (3) is integrally connected to a central shaft (12) extending through a central bore (13) of the second piece (2).

8. A dielectric fitting according to claim 7, **characterised in that** an end piece (14) of the central shaft (12) projecting beyond the central bore (13) of the second piece (2) is bent outwards so as to fit tightly against the end surface of the second piece opposite the flange (9).

9. A dielectric fitting according to claim 7, **characterised in that** a washer (15) is fitted onto an end piece (14) of the shaft (12) projecting beyond the central bore (13) of the second piece (2).

10. A dielectric fitting according to any one of the preceding claims, **characterised in that** the dielectric components (3, 12, 15) are made of a polyamide-based material.
